(19) **Europäisches Patentamt**
**European Patent Office**
**Office européen des brevets**

(11) **EP 3 586 000 B1**

(12) **EUROPEAN PATENT SPECIFICATION**

(45) Date of publication and mention
of the grant of the patent:
**25.11.2020 Bulletin 2020/48**

(51) Int Cl.:
**F03D 80/00** *(2016.01)*   **F03D 80/80** *(2016.01)*

(21) Application number: **18703195.0**

(22) Date of filing: **31.01.2018**

(86) International application number:
**PCT/DK2018/050020**

(87) International publication number:
**WO 2018/153416 (30.08.2018 Gazette 2018/35)**

(54) **TOWER VIBRATION DAMPER**

TURMSCHWINGUNGSDÄMPFER

AMORTISSEUR DE VIBRATION DE TOUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2017 DK PA201770122**

(43) Date of publication of application:
**01.01.2020 Bulletin 2020/01**

(72) Inventor: **MADSEN, Søren Bøgelund**
**8200 Aarhus N (DK)**

(74) Representative: **Vestas Patents Department
Hedeager 42
8200 Aarhus N (DK)**

(73) Proprietor: **Vestas Wind Systems A/S
8200 Aarhus N (DK)**

(56) References cited:
**EP-A1- 2 889 471      EP-A1- 2 899 397
WO-A1-2015/062608   CN-B- 103 452 747
CN-U- 202 091 424     DE-A1- 10 302 687
US-A- 3 382 629**

**Description**

FIELD OF THE INVENTION

The present invention relates to a vibration damper to be mounted in for example a wind turbine tower. The vibration damper according to the present invention has a through-going opening that facilitates that for example service personnel may pass the vibration damper in an easy and safe way. The vibration damper according to the present invention may be used as a stand-alone vibration damper, or it may be provided as an add-on to an existing vibration damper.

BACKGROUND OF THE INVENTION

Damping of vortex induced vibrations within for example the wind turbine industry has become more important over the recent years as the height of modern wind turbine generators becomes higher and higher.

Generally, vortex induced vibrations may be dampened by either changing the shape of the structure being exposed to the wind, or changing the vibrational properties of the structure being exposed to the wind. Changing the shape of the structure may involve that for example spoilers are secured to the outer surfaces of the structure, while changing the vibrational properties of the structure may involve that the natural frequency of the structure is changed, or a vibration damper is added to the structure. The vibration damper is placed where the largest amplitudes of the vibration are present. In a normal wind turbine this would be the top of the tower or the nacelle.

CN 202091424 U describes an example of a vibration damper for mounting in a wind turbine tower.

In relation to wind turbine towers it is necessary to maintain a passageway between the top and bottom of the tower in order to allow service personnel to climb up inside the tower to access the nacelle when performing maintenance on the turbine. There are therefore space restrictions in relation to placing a vibration damper inside a wind turbine tower.

It may be seen as an object of embodiments of the present invention to provide a simple, compact and robust tower vibration damper that allows service personnel to pass the vibration damper in an easy and safe way inside the tower.

DESCRIPTION OF THE INVENTION

The above-mentioned objects are complied with by providing, in a first aspect, a tower vibration damper adapted to be mounted in a wind turbine tower, the tower vibration damper comprising:

-    a pendulum structure adapted to be suspended in the wind turbine tower, said pendulum structure comprising a pendulum body,

-    a chamber holding a damping liquid into which damping liquid the pendulum structure is at least partly immersed,

-    a plurality of damping elements arranged to dampen movements of the pendulum structure when suspended in the wind turbine tower, and

-    a suspension arrangement for suspending the pendulum structure in the wind turbine tower such that the pendulum structure is allowed to displace from a neutral position for the pendulum structure,

wherein the plurality of damping elements each comprises a foam portion composed of a resilient and porous foam material.

The tower vibration damper of the present invention is advantageous due to its simple, compact and robust design.

In an embodiment, the tower vibration damper according to the invention has a annularly shaped pendulum body.

The annularly shaped pendulum body allows service personnel to pass the vibration damper in an easy and safe way inside the tower. The pendulum structure may be made of iron and its weight may be in the range 3 -30 tons depending on the specific requirement.

In relation to the foam portions of the plurality of damping elements the term "resilient" describes, in the context of the present application, a material that is able to return to an original shape after being deformed for example by pulling, stretching, compressing, bending, etc. The term "porous" in the context of the present application describes a material comprising an open pore or cell structure. The foam portions of the plurality of damping elements are thereby permeable to fluids and thus allow passage of fluids, including the damping liquid, in and out of the foam portions.

In an uncompressed state the open pores of the foam portions may thus contain damping liquid. During compression of the foam portions the open pores may at least partly collapse. This compression generates an outward directed flow of damping liquid with a certain flow velocity. The flow velocity during compression is limited by a flow resistance which is determined by the dimensions, the porosity and shape of the foam portions.

During operation, a displacement of the pendulum structure from its neutral position may compress at least one of the plurality of damping elements whereby damping liquid contained in the open pores of the associated foam portion(s) will be squeezed out from the foam portion(s) with a certain flow velocity. As the flow velocity is limited by the flow resistance of the foam portion(s) energy is dissipated due to viscous friction. As a result the movement of the pendulum structure is dampened.

The foam portions of the plurality of damping element may be able to expand, and thereby restore their original shape, with a velocity being faster than the velocity at which the suspended pendulum is able to move. The stiffness versus flow resistance of the foam portion may be at a level where the foam portions can restore their shape during a time corresponding to $0.75 * \frac{1}{f_n}$, where $f_n$ is the oscillation frequency of the suspended pendulum in Hz. The reason for this being that the foam portions will be compressed during one quarter of the oscillation cycle of the suspended pendulum.

The foam portions may be made of a polymer material. Other suitable non-polymer materials that comply with the necessary requirements defined above can be selected.

The plurality of damping elements, including the foam portions, may in principle take any shape including rectangular volumes, quadratic volumes, cylindrical volumes, cones etc. Also, the number of damping elements may in principle be arbitrary. However, the number of damping elements should be sufficient to fulfil the required damping demands. Preferably, the number of damping elements is at least 3, such as multiples of 3, i.e. 3, 6, 9, 12, 15, 18 etc. In order to ensure symmetric damping properties around the pendulum structure the damping elements may be evenly distributed around a centre axis of the pendulum structure or around a centre axis of the wind turbine tower.

In order to fill the foam portions of the plurality of damping elements completely with damping liquid so as to achieve maximal damping the plurality of damping elements, or at least the foam portions, may advantageously be completely immersed into the damping liquid. It should be noted however that the plurality of damping elements may optionally be immersed only partially into the damping liquid. Moreover, the plurality of damping elements may be immersed into the damping liquid at different levels.

Each of the plurality of damping elements may further comprise a spring portion. This spring portion may be composed of a resilient and non-porous spring material. The spring portion may be embedded in, or integrated with, the foam portion using suitable manufacturing processes. The spring portion may comprise one or more springs, such as coil springs, hydraulic springs, pneumatic springs, torsion springs, helical springs, leaf springs, volute springs or combinations thereof. Thus, the overall resilient properties of the plurality of damping elements may be tailored by combining the resilient properties of the foam portion and the resilient properties of the spring portion.

The plurality of damping elements, the chamber and/or the pendulum structure may comprise corresponding attachment means for attachment of the plurality of damping elements to the chamber and/or the pendulum structure.

The chamber may comprise an outer boundary, an inner boundary and a bottom part extending between the outer boundary and the inner boundary. The chamber thus forms a container structure suitable for holding the damping liquid into which the pendulum structure and the plurality of damping elements are at least partly immersed. The chamber may be a separate element, or it may somehow be integrated in the wind turbine tower structure. For example, the outer boundary of the chamber may form part of the wind turbine tower wall.

The suspension arrangement may comprise a plurality of wires suspending the pendulum structure. Moreover, tuning means configured for adjusting the natural frequency of the tower damper may be provided as well. The natural frequency may be adjusted by adjusting the length of the plurality of wires. The tuning means may comprise, for each of said plurality of wires, a clamp secured to the tower at one end and to the wire at the other end. In order to adjust the length of the wires, and thereby adjust the natural frequency of the tower damper, the securing of the clamp to the tower is configured such that the clamp may be movable along the longitudinal direction of the wire. In the present context the term "length of the wires" should be taken to mean the length of the wires that are free to swing, i.e. the distance between the tuning means, where the wires are attached to the tower structure, and the pendulum structure. The wires may move angularly below the tuning means thereby allowing the pendulum structure to swing.

The damping liquid may comprise a suitable damping oil, includes products such as Texaco Way Lubricant x320, Exxon Mobilgear 600 XP 320 or Uno Vibration Absorber 320. Other damping liquids such as glycol and silicone oils may also be applicable.

The plurality of damping elements may be arranged between the pendulum structure and the inner boundary of the chamber. If three damping elements are applied they may be angularly spaced by 120 degrees. The damping elements may be secured to the pendulum structure and/or to the inner boundary of the chamber. Alternatively, the damping elements may be kept at the respective angular positions by appropriate securing means while being unattached to the pendulum structure and the inner boundary of the chamber.

The plurality of damping elements may also be arranged between the pendulum structure and the outer boundary of the chamber. If three damping elements are applied they may be angularly spaced by 120 degrees. Again, the damping elements may be secured to the pendulum structure and/or to the outer boundary of the chamber. Alternatively, the damping elements may be kept at the respective angular positions by appropriate securing means while being unattached to the pendulum structure and the outer boundary of the chamber.

Damping elements may also be arranged both between the pendulum structure and the inner boundary of the chamber, as well as between the pendulum structure and the outer boundary of the chamber. In this configuration damping elements arranged between the pendulum structure and the inner boundary of the chamber may be angularly shifted around a centre axis of the pendulum structure or around a centre axis of the wind turbine tower compared to damping elements arranged between the pendulum structure and the outer boundary of the chamber.

The tower vibration damper of the present invention may further comprise a plurality of leaf springs for providing additional damping. The plurality of leaf springs may be arranged between the pendulum structure and the inner boundary of the chamber. Each of the plurality of leaf springs may, at both of its two ends, comprise leaf spring securing means for securing the leaf spring to the pendulum structure.

The plurality of leaf springs may form an end-to-end structure between the pendulum structure and the inner boundary of the chamber. For example, the plurality of leaf springs may form a hexagonal structure within the pendulum structure, wherein the leaf springs are secured to the pendulum structure via respective leaf spring securing means.

The plurality of springs may alternatively be arranged between the pendulum structure and the outer boundary of the chamber. In this arrangement the plurality of springs may comprise cantilever springs. Each cantilever spring may comprise a low-friction slide block arranged on a free end of the cantilever spring. This low-friction slide block is configured for sliding across a surface of the pendulum structure. A suitable low-friction slide block may comprise a bronze block attached to the free end of each of the cantilever springs.

The plurality of springs, both leaf springs and cantilever springs, may be configured for urging the pendulum structure towards a neutral position.

In a second aspect the present invention relates to a wind turbine tower comprising a tower damper according to the first aspect.

BRIEF DESCRIPTION OF THE DRAWINGS

The present invention will now be described in further details with reference to the accompanying figures, wherein

Fig. 1 shows a side and a top view of a first embodiment of a foam-based tower vibration damper,

Fig. 2 shows a top view of a second embodiment of a foam-based tower vibration damper,

Fig. 3 shows a top view of a third embodiment of a foam-based tower vibration damper,

Fig. 4 shows a top view of a fourth embodiment of a foam-based tower vibration damper,

Fig. 5 shows a tower vibration damper applying foam-based damping elements in combination with leaf springs, and

Fig. 6 shows a tower vibration damper applying foam-based damping elements in combination with cantilever springs.

While the invention is susceptible to various modifications and alternative forms specific embodiments have been shown by way of examples in the drawings and will be described in details herein. It should be understood, however, that the invention is not intended to be limited to the particular forms disclosed. Rather, the invention is to cover all modifications, equivalents, and alternatives falling within the scope of the invention as defined by the appended claims.

DETAILED DESCRIPTION OF THE INVENTION

In its broadest aspect the present invention relates to a tower vibration damper having a simple, compact and robust design. The tower vibration damper of the present invention may advantageously be mounted in for example wind turbine towers as the tower vibration damper of the present invention enables service personnel to pass by the damper when accessing the nacelle in connection with service or breakdown of a wind turbine generator.

Alternatively, as vortex induced vibrations are most pronounced before the nacelle is installed, the tower vibration damper of the present invention may thus also be installed and operated in wind turbine towers during transport and/or storage thereof. The tower vibration damper may optionally be dismantled after the wind turbine has been assembled and reused in another tower. Alternatively, the tower vibration damper of the present invention may remain installed in the wind turbine tower during its operational lifetime.

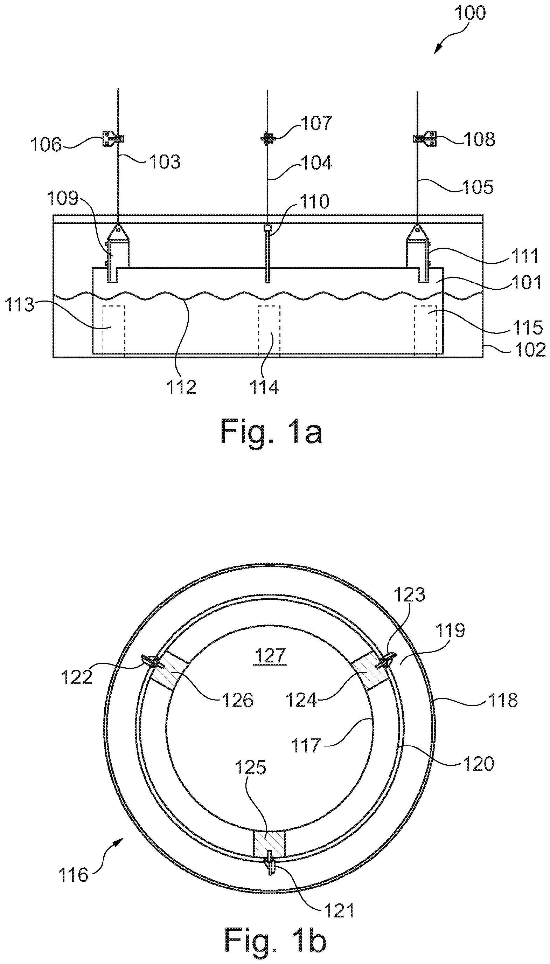

Referring now to Fig. 1a a side view of a first embodiment 100 of the present invention is depicted. Fig. 1a shows a annularly shaped pendulum structure 101 being suspended in three wires 103, 104, 105. The weight of the pendulum structure may be in the range of 3-30 tons depending on the required damping performance and the size of the wind turbine tower. Typically, the weight of the pendulum structure 101 is around 6-7 tons for a vortex damper, but this depends on the characteristics of a specific tower. The length of the wires 103, 104, 105 sets the natural frequency of the vibration damper. Thus, by varying the length of the wires 103, 104, 105 the natural frequency of the vibration damper may be altered and thereby tailored to specific demands.

In the present application the term "length of the wires" relates to the length of the wires that are free to swing, i.e. the distance between the suspension point where the wire is attached to the tower structure or an intermediate fixation point and the pendulum structure. Common for a suspension point and a fixation point is that the wire is fixed at least in relation to lateral displacements. The wire may move angularly below the suspension point or fixation point allowing the pendulum structure to swing.

In the first embodiment depicted in Fig. 1a the length of the wires 103, 104, 105 may be altered by moving the respective wire fixations arrangements 106, 107, 108 up and down, i.e. along the longitudinal direction of the wires 103, 104, 105. The natural frequency of the vibration damper is tuned to match the natural frequency of the wind turbine tower which is typically below 1 Hz, such as between 0.8 Hz and 0.9 Hz. The lengths of the three wires 103, 104, 105 are typically between 1 meter and 3 meters. During damping operations the pendulum structure 101 typically moves sideways with an amplitude of up to +/- 200 mm. The three wires 103, 104, 105 are attached to the pendulum structure via brackets 109, 110, 111, respectively.

As depicted in Fig. 1a the pendulum structure 101 is at least partly positioned in a chamber or bath 102 containing a damping liquid 112. The pendulum structure 101 is at least partly immersed into this damping liquid 112 in order to dampen oscillations of the pendulum structure. The damping liquid may comprise a suitable damping oil, such as Texaco Way Lubricant x320, Exxon Mobilgear 600 XP 320 or Uno Vibration Absorber 320. Alternatively, glycol or other liquids may be used as a damping liquid.

As indicated in Fig. 1a three damping elements 113, 114, 115 are fully immersed into the damping liquid 112. As it will become evident from Fig. 1b each of the damping elements 113, 114, 115 are positioned between the pendulum structure 101 and an inner boundary (not shown) of the chamber 102. As the damping elements 113, 114, 115 are fully immersed into the damping liquid 112 the pores of the respective foam portions of the damping elements are filled with damping liquid when the pendulum structure 101 is in its neutral position where the damping elements 113, 114, 115 are uncompressed. A displacement of the pendulum structure 101 from its neutral position will however compress at least one of the damping elements 113, 114, 115 whereby damping liquid will flow and eventually empty the pores of the compressed foam portion(s) creating dissipation of energy due to viscous friction. As a result the movement of the pendulum structure is dampened.

As already addressed the foam portions of the plurality of damping elements are made of a resilient and porous foam material. Each of the foam portions thus comprises an open pore structure which at least partly collapses during compression of the damping elements. When the foam portions restore via expansion to their uncompressed state the open pore structure is re-established. The damping elements may in principle take any shape including rectangular volumes, quadratic volumes, cylindrical volumes, cones etc. The foam portions of the damping elements should be able to expand, and thereby restore, from a compressed state with a velocity being faster than the velocity at which the suspended pendulum is able to move.

As previously addressed each of the plurality of damping elements may further comprise a spring portion composed of a resilient and non-porous spring material. The spring portion can be embedded in, or integrated with, the foam portion using suitable manufacturing processes. The spring portion may comprise coil springs, leaf springs, volute springs etc.

The tower vibration damper of the present invention is adapted to be installed at a position as high as possible inside a vertical wind turbine tower. Typically, an installation of the tower vibration damper within the upper 1/3 of a vertical wind turbine tower will provide effective damping of tower vibrations.

Referring now to Fig. 1b a top view of the first embodiment 116 is depicted. As addressed in connection with Fig. 1a the annularly shaped pendulum structure 120 is at least partly positioned in a chamber or bath having an outer boundary 118, an inner boundary 117 and a bottom part 119. The outer boundary 118 of the chamber may be formed by the tower wall. The pendulum structure 120 as well as the chamber has a through-going opening 127. This through-going opening 127 may be used by service personnel as an easy and safe passage through the vibration damper in case a wind turbine generator is to be serviced or repaired. As already addressed the chamber is at least partly filled with a suitable damping liquid (not shown) into which damping liquid the pendulum structure 120 is as least partly immersed. The pendulum structure 120 is suspended in brackets 121, 122, 123.

In order to dampen movements of the suspended pendulum structure 120 three fully immersed damping elements 124, 125, 126 are arranged between the pendulum structure 120 and the inner boundary 117 of the chamber. The damping elements 124, 125, 126 which are angularly spaced by 120 degrees may be secured to the pendulum structure 120 and/or to the inner boundary 117. Alternatively, the damping elements 124, 125, 126 may be kept at the respective angular positions by appropriate securing means while being unattached to the pendulum structure 120 and the inner boundary 117. As it will be evident from the following figures the number of damping elements as well as the positioning thereof may be tailored to specific demands.

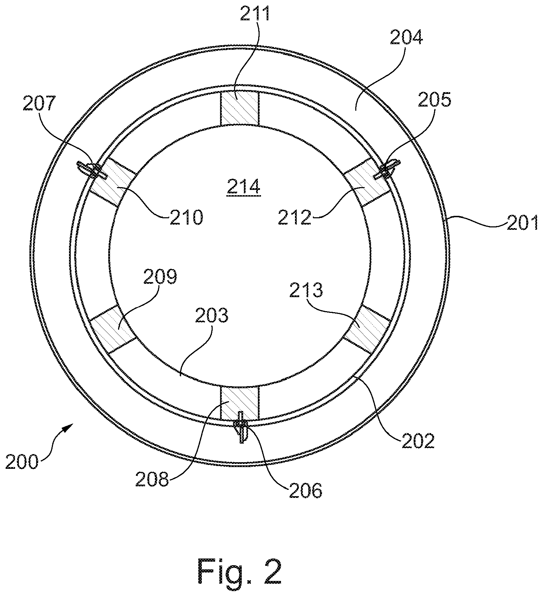

Fig. 2 depicts a second embodiment 200 applying six fully immersed damping elements 208-213 arranged between the pendulum structure 202 and the inner boundary 203 of the chamber. The chamber further comprises an outer boundary 201, which may form part of a tower wall, and a bottom part 204 and thus forms a bath for the damping liquid (not shown). The pendulum structure 202 is suspended in brackets 205, 206, 207 which are aligned with every second damping element 208, 210, 212. The six damping elements 208-213 which are angularly spaced by 60 degrees may be secured to the pendulum structure 202 and/or to the inner boundary 203 of the chamber. Alternatively, the damping elements 208-213 may be kept at the respective angular positions by appropriate securing means while being unattached to the pendulum structure 202 and the inner boundary 203. The pendulum structure 202 as well as the chamber has a through-going opening 214 which may be used by service personnel as an easy and safe passage through the vibration damper in case a wind turbine generator is to be serviced or repaired.

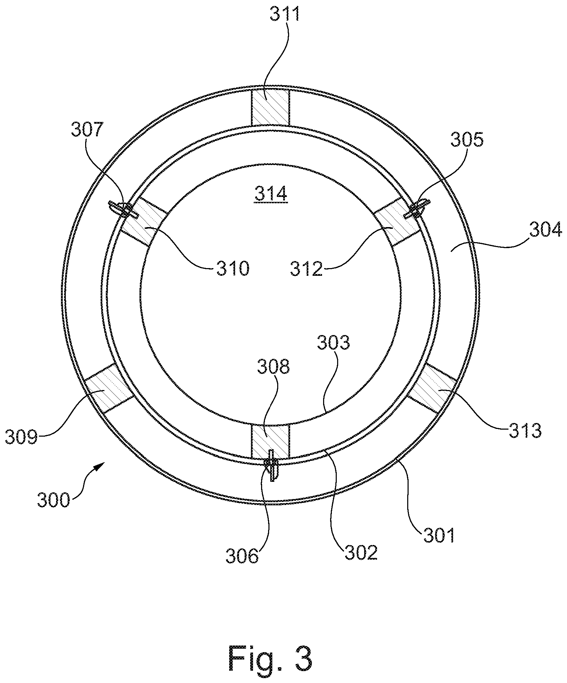

Fig. 3 shows a third embodiment 300 also applying six fully immersed damping elements 308-313. As seen in Fig. 3 three damping elements 308, 310, 312 are arranged between the pendulum structure 302 and the inner boundary 303 of the chamber, whereas three other damping elements 309, 311, 313 are arranged between the pendulum structure 302 and the outer boundary 301 of the chamber which may form part of a tower wall. The chamber further comprises a bottom part 304. The pendulum structure 302 is suspended in brackets 305, 306, 307. The three damping elements 308, 310, 312 which are angularly spaced by 120 degrees may be secured to the pendulum structure 302 and/or to the inner boundary 303 of the chamber. Alternatively, the damping elements 308, 310, 312 may be kept at the respective angular positions by appropriate securing means while being unattached to the pendulum structure 302 and the inner boundary 303. Similarly, the three damping elements 309, 311, 313 which are also angularly spaced by 120 degrees may be secured to the pendulum structure 302 and/or to the outer boundary 301 of the chamber. Alternatively, the damping elements 309, 311, 313 may be kept at the respective angular positions by appropriate securing means while being unattached to the pendulum structure 302 and the outer boundary 301. The damping elements 308, 310, 312 are angularly shifted by 60 degrees relative to the damping elements 309, 311, 313. The pendulum structure 302 as well as the chamber has a through-going opening 314 which may be used by service personnel as an easy and safe passage through the vibration damper in case a wind turbine generator is to be serviced or repaired.

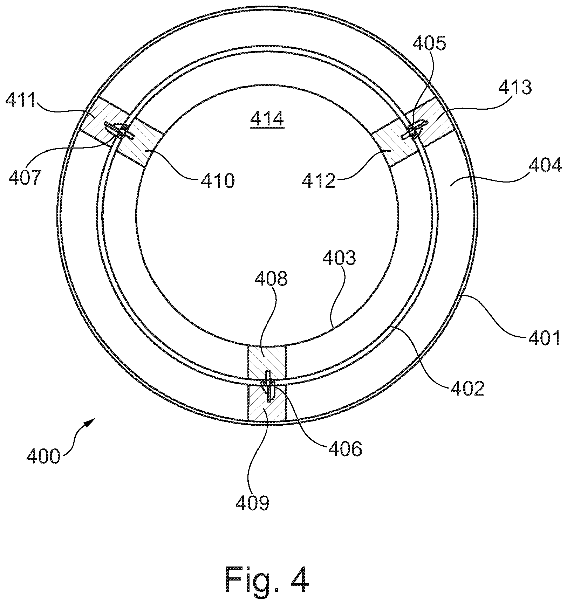

Fig. 4 shows a fourth embodiment 400 applying six fully immersed damping elements 408-413. As seen in Fig. 4 three damping elements 408, 410, 412 are arranged between the pendulum structure 402 and the inner boundary 403 of the chamber, whereas three other damping elements 409, 411, 413 are arranged between the pendulum structure 402 and the outer boundary 401 of the chamber which may form part of a tower wall. The chamber further comprises a bottom part 404. The pendulum structure 402 is suspended in brackets 405, 406, 407. The three damping elements 408, 410, 412 which are angularly spaced by 120 degrees may be secured to the pendulum structure 402 and/or to the inner boundary 403 of the chamber. Alternatively, the damping elements 408, 410, 412 may be kept at the respective angular positions by appropriate securing means while being unattached to the pendulum structure 402 and the inner boundary 403. Similarly, the three damping elements 409, 411, 413 which are angularly aligned with respective damping elements 408, 410, 412 may also be secured to the pendulum structure 402 and/or to the outer boundary 401 of the chamber. Alternatively, the damping elements 409, 411, 413 may be kept at the respective angular positions by appropriate securing means while being unattached to the pendulum structure 402 and the outer boundary 401 of the chamber. Again, the pendulum structure 402 as well as the chamber has a through-going opening 414 which may be used by service personnel as an easy and safe passage through the vibration damper in case a wind turbine generator is to be serviced or repaired.

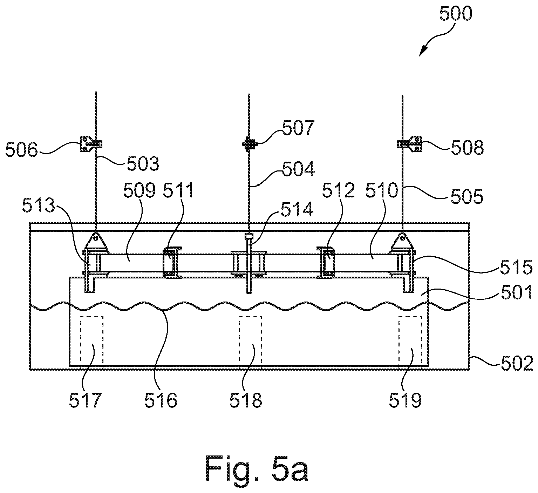

Turning now to Fig. 5a an embodiment 500 applying both foam-based damping elements and leaf springs for damping purposes is depicted in a side view perspective. Fig. 5a shows a annularly shaped pendulum structure 501 being suspended in three wires 503, 504, 505. As previously addressed the length of the wires 503, 504, 505 set the natural frequency of the vibration damper. Thus, by varying the length of the wires 503, 504, 505 the natural frequency of the vibration damper may be thereby tailored to specific demands. In the embodiment depicted in Fig. 5a the length of the wires 503, 504, 505 may be altered by moving the respective wire fixations arrangements 506, 507, 508 up and down, i.e. along the longitudinal direction of the wires. The natural frequency of the vibration damper in a vortex damper configuration is tuned to match the natural frequency of the wind turbine tower which is typically between 0.8 Hz and 0.9 Hz. A tower damper to be used when the turbine is in service may be tuned to a range between 0.2 Hz to 0.9 Hz. The lengths of the three wires 503, 504, 505 are typically between 1 meter and 3 meters. During damping operations the pendulum structure 501 typically moves sideways with an amplitude of up to +/- 200 mm.

As depicted in Fig. 5a the pendulum structure 501 is at least partly positioned in a chamber 502 containing a damping liquid 516. The pendulum structure 501 is at least partly immersed into this damping liquid 516 in order to dampen movements of the pendulum structure 501. The damping liquid 516 may be of the kind previously disclosed.

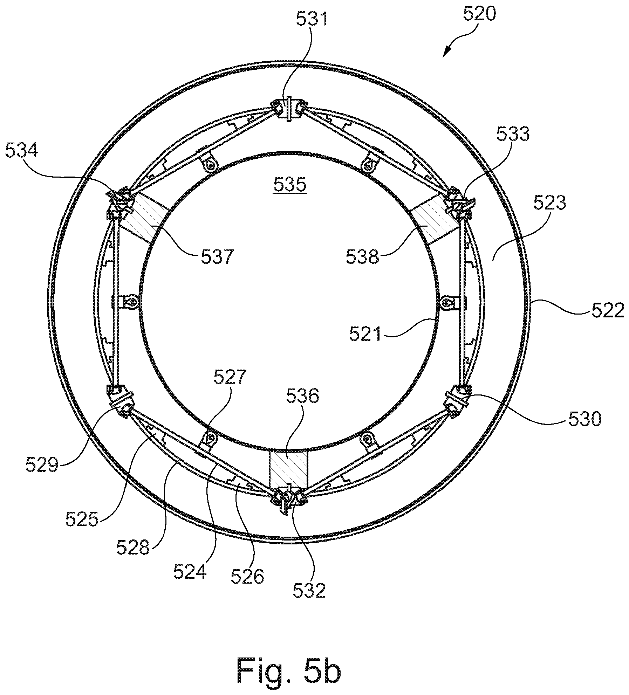

As seen in Fig. 5a leaf springs 509, 510 in the form of flat spring elements are secured to the pendulum structure at brackets 513, 514, 515. At or near the centre of each of the leaf springs 509, 510 a spring-loaded roller 511, 512 is provided. As it will become evident from Fig. 5b each of the spring-loaded rollers 511, 512 provides, via the leaf springs 509, 510 to which they are secured, pretension toward an inner boundary (not shown) of the chamber 502 as long as the pendulum structure 501 is in its neutral position.

As also indicated in Fig. 5a additional damping is provided by three fully immersed damping elements 517, 518, 519 arranged between the pendulum structure 501 and an inner boundary (not shown) of the chamber 502.

Fig. 5b shows a top view of the embodiment 520 shown in Fig. 5a. In Fig. 5b the six leaf springs 524 form a hexagonal structure within the pendulum structure 528. The six leaf springs 524 are secured to the pendulum structure 528 via brackets 529-534. The pendulum structure 528 is adapted to be suspended in a wire arrangement at brackets 532, 533, 534. Each leaf spring 524 provides pretension towards the inner boundary 521 of the chamber via a spring-loaded roller 527 as long as the pendulum structure 528 is in its neutral position. The spring-loaded rollers 527 are positioned at or near the centre of each of the leaf springs 528. In order to achieve a fully direction independent composite stiffness the properties of the six leaf springs are typically similar, and they are equally distributed around the pendulum structure 528 as well. Also, no parasitic loads are provided to the leaf springs 524. In order to limit the swing amplitude of the pendulum structure 528 and not damage the pendulum structure itself or the leaf springs 524 a resilient buffer arrangement 525, 526 is provided between the pendulum structure 528 and each of the leaf springs 524. The buffer arrangement 525, 526 may be implemented in various ways, such as a rubber material. Again, the pendulum structure 528 as well as the chamber has a through-going opening 535 which may be used by service personnel as an easy and safe passage through the vibration damper in case a wind turbine generator is to be serviced or repaired.

Each leaf spring may comprise a plurality of individual springs which are stacked to form the final leaf spring. The number of individual springs may be selected in accordance with specific demands, such as required stiffness, damping, natural frequency etc. In the embodiment shown in Figs. 5a and 5b six individual springs have been stacked to form each of the six leaf springs. The dimensions of each of the individual springs shown are 200 x 8 x 1900 mm (h x b x I). The spring material may either be ultra-high strength plate material or common commercial spring steel, such as for example be UHS/Weldox 1300 plate. It should be noted however that the number and the dimensions of the individual springs are generally selected so as to meet a required stiffness in order to obtain a required natural frequency of the pendulum structure.

In order to provide additional damping of the movements of the suspended pendulum structure 528 three fully immersed damping elements 536, 537, 538 are arranged between the pendulum structure 528 and the inner boundary 521 of the chamber. The chamber further comprises an outer boundary 522 and a bottom part 523. The three damping elements 536, 537, 538 which are angularly spaced by 120 degrees may, as previously addressed, be secured to the pendulum structure 528 and/or to the inner boundary 521. Alternatively, the damping elements 536, 537, 538 may be kept at the respective angular positions by appropriate securing means while being unattached to the pendulum structure 528 and the inner boundary 521. Evidently, the number of damping elements as well as the positioning thereof may be tailored to specific demands as exemplified in Figs. 2-4.

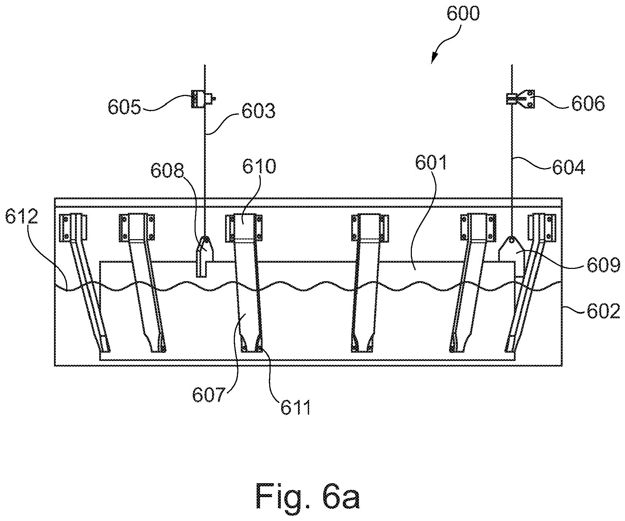

Turning now to Fig. 6a another embodiment 600 of the present invention is depicted. Similar to the previous embodiments the pendulum structure 601 is at least partly positioned in a chamber 602 which also contains a suitable damping liquid 612 into which damping liquid the pendulum structure 601 is at least partly immersed. The pendulum structure 601 is suspended in a wire arrangement 603, 604 which is secured to the pendulum structure 601 at respective brackets 608, 609. The length of these wires 603, 604 sets the natural frequency of the vibration damper. Thus, by changing the length of the wires 603, 604 the natural frequency of the vibration damper may be altered and thereby tailored to specific demands. The length of the wires 603, 604 may be altered by moving the respective wire fixations arrangements 605, 606 up and down.

As seen in Fig. 6a a plurality of springs 607 in the form of cantilever springs are arranged between the chamber 602 and the pendulum structure 601. Each of the cantilever springs 607 is secured to an outer boundary of the chamber at one of its ends 610 while the opposite end 611 of the cantilever spring 607 is abutting the pendulum structure 601 in its neutral position without being secured thereto. Thus, when the pendulum structure 601 is displaced, the free end 611 of the cantilever springs 607 slides across an outer surface of the pendulum structure 601.

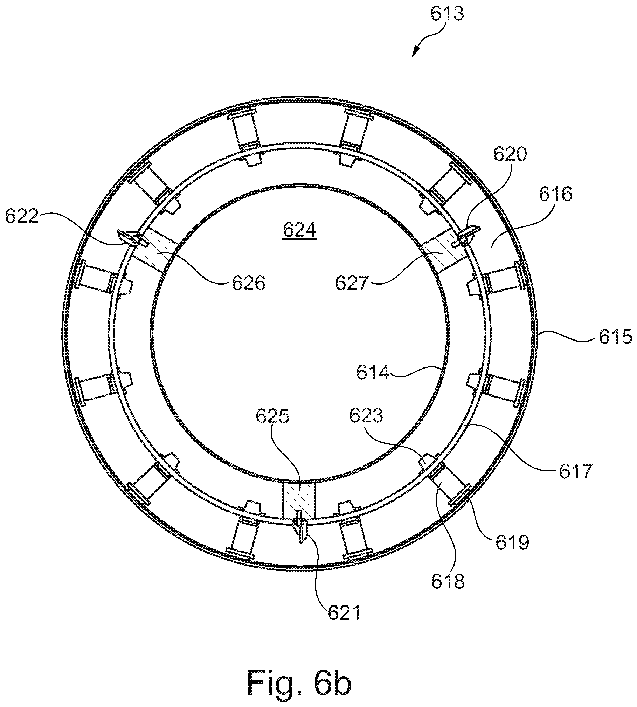

Fig. 6b shows a top view of the embodiment 613 shown in Fig. 6a. In Fig. 6b the annularly shaped pendulum structure 617 is at least partly positioned in the chamber having an outer boundary 615, an inner boundary 614 and a bottom part 616. The outer boundary 615 of the chamber may be formed by the tower wall. Similar to the previous embodiments the pendulum structure 617 as well as the chamber has a through-going opening 624 which may be used by service personnel as an easy and safe passage through the vibration damper in case a wind turbine generator is to be serviced or repaired. As already addressed the chamber is at least partly filled with a suitable damping liquid into which damping liquid the pendulum structure 617 is as least partly immersed. The pendulum structure 617 is adapted to be suspended in a wire arrangement at brackets 620, 621, 622.

A total number of twelve cantilever springs 618 are secured at one end 619 to the outer boundary 615 of the chamber. The opposite ends of the respective cantilever springs 618 are adapted to abut and thereby slide across the outer surface of the pendulum structure 617 in response to displacements thereof. Alternatively, a through-going insert 623 may be incorporated into the pendulum structure 617 for each of the cantilever springs 618. The free end of the respective cantilever springs 618 are adapted to abut and slide on the respective inserts 623.

In order to provide additional damping of the movements of the suspended pendulum structure 617 three fully immersed foam-based damping elements 625, 626, 627 are arranged between the pendulum structure 617 and the inner boundary 614 of the chamber. The three damping elements 625, 626, 627 which are angularly spaced by 120 degrees may be secured to the pendulum structure 617 and/or to the inner boundary 614. Alternatively, the damping elements 625, 626, 627 may be kept at the respective angular positions by appropriate securing means while being unattached to the pendulum structure 617 and the inner boundary 614. Evidently, the number of damping elements as well as the positioning thereof may be tailored to specific demands as exemplified in Figs. 2-4.

Each of the cantilever springs to be used in connection with the embodiment of Fig. 6 comprises an upper part adapted to be secured to the chamber and a lower part adapted to act as a resilient part as the lower end thereof is adapted to abut and slide across the outer surface of the pendulum structure. Each cantilever spring may comprise a plurality of individual springs which are stacked to form the final cantilever springs. The number of individual springs may be selected in accordance with specific demands. The spring material may for example be UHS/Weldox 1300 plate. A bronze pad may be provided at the lower end of the cantilever spring in order to reduce friction between the cantilever spring and the pendulum structure. Alternatively, one of the individual springs forming the cantilever spring may be extended and slightly bend to reduce friction.

## Claims

1. A tower vibration damper adapted to be mounted in a wind turbine tower, the tower vibration damper comprising:

   - a pendulum structure adapted to be suspended in the wind turbine tower, said pendulum structure comprising a pendulum body,
   - a chamber holding a damping liquid into which damping liquid the pendulum structure is at least partly immersed,
   - a plurality of damping elements arranged to dampen movements of the pendulum structure when suspended in the wind turbine tower, and
   - a suspension arrangement for suspending the pendulum structure in the wind turbine tower such that the pendulum structure is allowed to displace from a neutral position for the pendulum structure,

   wherein the plurality of damping elements each comprises a foam portion composed of a resilient and porous foam material.

2. A tower vibration damper according to claim 1, wherein the pendulum body is annularly shaped.

3. A tower vibration damper according to claim 1 or 2, wherein the plurality of damping elements comprise at least 3 damping elements, such as multiples of 3 damping elements.

4. A tower vibration damper according to any of claims 1-3, wherein the damping elements are evenly distributed around a centre axis of the pendulum structure or around a centre axis of the wind turbine tower.

5. A tower vibration damper according to any of claims 1-4, wherein the plurality of damping elements are completely immersed into the damping liquid.

6. A tower vibration damper according to any of claims 1-5, wherein each of the plurality of damping elements further comprises a spring portion composed of a resilient and non-porous spring material.

7. A tower vibration damper according to claim 6, wherein the spring portion comprises one or more springs, such as coil springs, hydraulic springs, pneumatic springs, torsion springs, helical springs, leaf springs, volute springs or a combination thereof.

8. A tower vibration damper according to any of claims 1-7, wherein the plurality of damping elements, the chamber and/or the pendulum structure comprise corresponding attachment means for attachment of the plurality of damping elements to the chamber and/or the pendulum structure.

9. A tower vibration damper according to any of claims 1-8, wherein the chamber comprises an outer boundary, an inner boundary and a bottom part extending between the outer boundary and the inner boundary.

10. A tower vibration damper according claim 9, wherein the outer boundary of the chamber forms part of the wind turbine tower wall.

11. A tower vibration damper according to claim 9 or 10, wherein damping elements are arranged between the pendulum structure and the inner boundary of the chamber and/or wherein damping elements are arranged between the pendulum structure and the outer boundary of the chamber.

12. A tower vibration damper according to claim 9 or 10, wherein damping elements arranged between the pendulum structure and the inner boundary of the chamber are angularly shifted around a centre axis of the pendulum structure or around a centre axis of the wind turbine tower compared to damping elements arranged between the pendulum structure and the outer boundary of the chamber.

13. A tower vibration damper according to any of claims 9-12, further comprising a plurality of spring elements arranged to dampen movements of the pendulum structure when suspended in the wind turbine tower, the plurality of spring element being arranged between the pendulum structure and the inner boundary of the chamber or between the pendulum structure and the outer boundary of the chamber, the plurality of springs being arranged for pre-tensioning the pendulum structure towards a neutral position for the pendulum structure.

14. A tower vibration damper according to claim 13, wherein

- each of the plurality of springs comprises a leaf spring which leaf spring, at both of its two ends, comprises leaf spring securing means for securing the leaf spring to the pendulum structure, or wherein
- each of the plurality of springs comprises a cantilever spring having a low-friction slide block arranged on a free end of the cantilever spring, wherein the low-friction slide block is configured for operable contact between the cantilever spring and pendulum structure.

15. A tower vibration damper according to any of the preceding claims, wherein the damping liquid comprises an oil or glycol-water mixture.

16. A wind turbine tower comprising a tower vibration damper according to any of the preceding claims.

**Patentansprüche**

1. Turmschwingungsdämpfer, der angepasst ist, in einem Turm einer Windkraftanlage montiert zu werden, wobei der Turmschwingungsdämpfer Folgendes umfasst:

- eine Pendelstruktur, die angepasst ist, in dem Turm der Windkraftanlage aufgehängt zu werden, wobei die Pendelstruktur einen Pendelkörper umfasst,
- eine Kammer, die eine Dämpfungsflüssigkeit hält, in welche Dämpfungsflüssigkeit die Pendelstruktur mindestens teilweise eingetaucht wird,
- eine Vielzahl von Dämpfungselementen, die angeordnet sind, um Bewegungen der Pendelstruktur zu dämpfen, wenn diese in dem Turm der Windkraftanlage aufgehängt ist, und
- eine Aufhängungsanordnung zum Aufhängen der Pendelstruktur in dem Turm der Windkraftanlage, sodass die Pendelstruktur sich von einer neutralen Position aus für die Pendelstruktur versetzen kann,

wobei die Vielzahl von Dämpfungselementen jeweils einen Schaumabschnitt umfasst, der aus einem elastischen und porösen Schaummaterial besteht.

2. Turmschwingungsdämpfer nach Anspruch 1, wobei der Pendelkörper eine ringförmige Form aufweist.

3. Turmschwingungsdämpfer nach Anspruch 1 oder 2, wobei die Vielzahl von Dämpfungselementen mindestens 3 Dämpfungselement, wie z. B. ein Mehrfaches von 3 Dämpfungselementen, umfasst.

4. Turmschwingungsdämpfer nach einem der Ansprüche 1-3, wobei die Dämpfungselemente um eine Mittelachse der Pendelstruktur oder um eine Mittelachse des Turms der Windkraftanlage herum gleichmäßig verteilt sind.

5. Turmschwingungsdämpfer nach einem der Ansprüche 1-4, wobei die Vielzahl von Dämpfungselementen vollständig in einer Dämpfungsflüssigkeit eingetaucht ist.

6. Turmschwingungsdämpfer nach einem der Ansprüche 1-5, wobei jede der Vielzahl von Dämpfungselementen weiter einen Federabschnitt umfasst, der aus einem elastischen und nichtporösen Federmaterial besteht.

7. Turmschwingungsdämpfer nach Anspruch 6, wobei der Federabschnitt eine oder mehrere Federn umfasst, wie z. B. Spiralfedern, Hydraulikfedern, Luftfedern, Torsionsfedern, Schraubenfedern, Blattfedern, Kegelfedern oder eine Kombination davon.

8. Turmschwingungsdämpfer nach einem der Ansprüche 1-7, wobei die Vielzahl von Dämpfungselementen, die Kammer und/oder die Pendelstruktur entsprechende Befestigungsmittel zum Befestigen der Vielzahl von Dämpfungselementen an der Kammer und/oder der Pendelstruktur umfasst.

9. Turmschwingungsdämpfer nach einem der Ansprüche 1-8, wobei die Kammer eine äußere Begrenzung, eine innere Begrenzung und einen Bodenteil, der sich zwischen der äußeren Begrenzung und der inneren Begrenzung erstreckt, umfasst.

10. Turmschwingungsdämpfer nach Anspruch 9, wobei die äußere Begrenzung der Kammer Teil der Turmwand der Windkraftanlage bildet.

11. Turmschwingungsdämpfer nach Anspruch 9 oder 10, wobei Dämpfungselemente zwischen der Pendelstruktur und der inneren Begrenzung der Kammer angeordnet sind und/oder wobei Dämpfungselemente zwischen der Pendelstruktur und der äußeren Begrenzung der Kammer angeordnet sind.

**12.** Turmschwingungsdämpfer nach Anspruch 9 oder 10, wobei Dämpfungselemente, die zwischen der Pendelstruktur und der inneren Begrenzung der Kammer angeordnet sind, winkelförmig um eine Mittelachse der Pendelstruktur oder um eine Mittelachse des Turms der Windkraftanlage im Vergleich zu Dämpfungselementen angeordnet sind, die zwischen der Pendelstruktur und der äußeren Begrenzung der Kammer angeordnet sind.

**13.** Turmschwingungsdämpfer nach einem der Ansprüche 9-12, weiter umfassend eine Vielzahl von Federelementen, die angeordnet sind, um Bewegungen der Pendelstruktur zu dämpfen, wenn diese in dem Turm der Windkraftanlage aufgehängt ist, wobei die Vielzahl von Federelementen zwischen der Pendelstruktur und der inneren Begrenzung der Kammer oder zwischen der Pendelstruktur und der äußeren Begrenzung der Kammer angeordnet ist, wobei die Vielzahl von Federn zum Vorspannen der Pendelstruktur zu einer neutralen Position für die Pendelstruktur hin angeordnet ist.

**14.** Turmschwingungsdämpfer nach Anspruch 13, wobei

     - jede der Vielzahl von Federn eine Blattfeder umfasst, wobei die Blattfeder an beiden ihrer zwei Enden eine Blattfeder zum Sichern von Mitteln zum Sichern der Blattfeder an der Pendelstruktur umfasst, oder wobei
     - jede der Vielzahl von Federn eine freitragende Feder umfasst, die einen reibungsarmen Gleitklotz aufweist, der an einem freien Ende der freitragenden Feder angeordnet ist, wobei der reibungsarme Gleitklotz für einen funktionstüchtigen Kontakt zwischen der freitragenden Feder und der Pendelstruktur konfiguriert ist.

**15.** Turmschwingungsdämpfer nach einem der vorstehenden Ansprüche, wobei die Dämpfungsflüssigkeit ein Öl oder eine Glykol-Wasser-Mischung umfasst.

**16.** Turm einer Windkraftanlage, umfassend einen Turmschwingungsdämpfer nach einem der vorstehenden Ansprüche.

**Revendications**

**1.** Amortisseur de vibrations de tour adapté pour être monté dans une tour d'éolienne, l'amortisseur de vibrations de tour comprenant :

     - une structure de pendule adaptée pour être suspendue dans la tour d'éolienne, ladite structure de pendule comprenant un corps de pendule,
     - une chambre contenant un liquide d'amortissement, liquide d'amortissement dans lequel la structure de pendule est au moins partiellement immergée,
     - une pluralité d'éléments d'amortissement agencés pour amortir des mouvements de la structure de pendule lorsqu'elle est suspendue dans la tour d'éolienne, et
     - un agencement de suspension pour suspendre la structure de pendule dans la tour d'éolienne de sorte que la structure de pendule puisse se déplacer à partir d'une position neutre pour la structure de pendule,

dans lequel chacun de la pluralité d'éléments d'amortissement comprend une portion expansée composée d'un matériau expansé résilient et poreux.

**2.** Amortisseur de vibrations de tour selon la revendication 1, dans lequel le corps de pendule est de forme annulaire.

**3.** Amortisseur de vibrations de tour selon la revendication 1 ou 2, dans lequel la pluralité d'éléments d'amortissement comprend au moins 3 éléments d'amortissement, tels que des multiples de 3 éléments d'amortissement.

**4.** Amortisseur de vibrations de tour selon l'une quelconque des revendications 1 à 3, dans lequel les éléments d'amortissement sont répartis régulièrement autour d'un axe central de la structure de pendule ou autour d'un axe central de la tour d'éolienne.

**5.** Amortisseur de vibrations de tour selon l'une quelconque des revendications 1 à 4, dans lequel la pluralité d'éléments d'amortissement est complètement immergée dans le liquide d'amortissement.

**6.** Amortisseur de vibrations de tour selon l'une quelconque des revendications 1 à 5, dans lequel chacun de la pluralité d'éléments d'amortissement comprend en outre une portion de ressort composée d'un matériau de ressort résilient et non poreux.

**7.** Amortisseur de vibrations de tour selon la revendication 6, dans lequel la portion de ressort comprend un ou plusieurs ressorts, tels que des ressorts en spirale, des ressorts hydrauliques, des ressorts pneumatiques, des ressorts à torsion, des ressorts hélicoïdaux, des ressorts à lames, des ressorts en volute, ou une combinaison de ceux-ci.

**8.** Amortisseur de vibrations de tour selon l'une quelconque des revendications 1 à 7, dans lequel la pluralité d'éléments d'amortissement, la chambre et/ou la structure de pendule comprennent des moyens d'attache correspondants pour l'attache de la pluralité d'éléments d'amortissement à la chambre et/ou à la structure de pendule.

9. Amortisseur de vibrations de tour selon l'une quelconque des revendications 1 à 8, dans lequel la chambre comprend une limite externe, une limite interne, et une partie de fond s'étendant entre la limite externe et la limite interne.

10. Amortisseur de vibrations de tour selon la revendication 9, dans lequel la limite externe de la chambre forme une partie de la paroi de tour d'éolienne.

11. Amortisseur de vibrations de tour selon la revendication 9 ou 10, dans lequel des éléments d'amortissement sont agencés entre la structure de pendule et la limite interne de la chambre et/ou dans lequel des éléments d'amortissement sont agencés entre la structure de pendule et la limite externe de la chambre.

12. Amortisseur de vibrations de tour selon la revendication 9 ou 10, dans lequel des éléments d'amortissement agencés entre la structure de pendule et la limite interne de la chambre sont décalés angulairement autour d'un axe central de la structure de pendule ou autour d'un axe central de la tour d'éolienne en comparaison avec des éléments d'amortissement agencés entre la structure de pendule et la limite externe de la chambre.

13. Amortisseur de vibrations de tour selon l'une quelconque des revendications 9 à 12, comprenant en outre une pluralité d'éléments d'amortissement agencés pour amortir des mouvements de la structure de pendule lorsqu'elle est suspendue dans la tour d'éolienne, la pluralité d'éléments d'amortissement étant agencés entre la structure de pendule et la limite interne de la chambre ou entre la structure de pendule et la limite externe de la chambre, la pluralité de ressorts étant agencés pour prétensionner la structure de pendule vers une position neutre pour la structure de pendule.

14. Amortisseur de vibrations de tour selon la revendication 13, dans lequel

    - chacun de la pluralité de ressorts comprend un ressort à lames, lequel ressort à lames, à ses deux extrémités, comprend des moyens de fixation de ressort à lames pour fixer le ressort à lames à la structure de pendule, ou dans lequel
    - chacun de la pluralité de ressorts comprend un ressort en porte-à-faux ayant un bloc coulissant à faible frottement agencé sur une extrémité libre du ressort en porte-à-faux, dans lequel le bloc coulissant à faible frottement est configuré pour un contact fonctionnel entre le ressort en porte-à-faux et la structure de pendule.

15. Amortisseur de vibrations de tour selon l'une quelconque des revendications précédentes, dans lequel le liquide d'amortissement comprend un mélange d'huile ou glycol-eau.

16. Tour d'éolienne comprenant un amortisseur de vibrations de tour selon l'une quelconque des revendications précédentes.

Fig. 1a

Fig. 1b

Fig. 2

Fig. 3

Fig. 4

Fig. 5a

Fig. 5b

Fig. 6a

Fig. 6b

**EP 3 586 000 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202091424 U